Europäisches Patentamt

European Patent Office

Office européen des brevets

(19)

(11) **EP 0 436 365 B1**

(12) **EUROPEAN PATENT SPECIFICATION**

(45) Date of publication and mention
of the grant of the patent:
**27.05.1998 Bulletin 1998/22**

(51) Int Cl.⁶: **G06F 1/00**, G06F 12/14

(21) Application number: **90314097.8**

(22) Date of filing: **21.12.1990**

(54) **Method and system for securing terminals**

Verfahren und System zur Sicherung von Datenendgeräten

Procédé et sytème pour protéger des terminaux

(84) Designated Contracting States:
**DE GB NL**

(30) Priority: **26.12.1989 US 456672**

(43) Date of publication of application:
**10.07.1991 Bulletin 1991/28**

(73) Proprietor: **DIGITAL EQUIPMENT CORPORATION**
**Maynard, Massachusetts 01745 (US)**

(72) Inventors:
• **Hu, Wei-Ming**
  **Arlington, Massachusetts 02174 (US)**

• **Kahn, Clifford E.**
  **Framingham, Massachusetts 01701 (US)**

(74) Representative: **Hale, Peter et al**
**Kilburn & Strode**
**20 Red Lion Street**
**London WC1R 4PJ (GB)**

(56) References cited:
**EP-A- 0 067 611**      **EP-A- 0 151 714**
**EP-A- 0 326 700**      **US-A- 4 591 978**

EP 0 436 365 B1

**Description**

This invention relates generally to improving security in a computer system, and more particularly to erasing host-readable and -writable memory in terminals or other peripherals to prevent unwanted access to information contained in the memory.

Those of ordinary skill will recognise that secrecy, i.e., the prevention of unauthorised access to information, is but one component of computer "security," as that term is commonly used. Other components include "integrity," namely the prevention of tampering with the information, and the prevention of unauthorised denial of service. The US Department of Defence publication entitled "Department of Defence Trusted Computer System Evaluation Criteria", sometimes referred to as the "Orange Book", describes a number of common system security objectives and evaluation criteria for secure computer systems.

Historically, information has been a highly sought-after asset of businesses and governments. Prior to the computer revolution, locked filing cabinets, safes, secured buildings, guards, alarm systems and video surveillance were used to protect important information. Proper physical security measures, such as these, were usually adequate to prevent the undesirable dissemination of information.

Because computers are now being used to store information, instead of filing cabinets, these physical security measures have become less effective. Not only can all users access information within a given computer system, but physical security cannot necessarily protect against communications between the computer system and remote devices. Therefore, many computerised information systems include internal security which may provide users with different levels of access to the computerised information, and may protect the computerised information from other types of undesirable access.

The concept of a "security kernel" addresses secrecy and other security problems in part by providing internal controls to isolate sensitive information. A security kernel can be particularly useful for multiuser computer installations where information is shared among the users. The security kernel implements a security policy which aims to identify the permissible modes of access between users or computer processes (subjects) and files or memory segments (objects). Access to stored information may be meditated by the security kernel, so that the security kernel can attempt to determine whether a particular user or computer process can access particular information.

To promote the effectiveness of the security kernel in fulfilling its protective function, the kernel should be protected as much as possible from tampering. The security kernel is commonly referred to as "trusted code", which means that the software, firmware, and/or hardware of the security kernel is protected at least to some extent from being modified in an unauthorised fashion.

The security kernel typically may follow a set of non-discretionary rules and a set of discretionary rules for access determination. In order to follow the nondiscretionary rules, each "subject" (i.e., the person or process attempting to access information) and each "object" (i.e., the information that is the object of the access attempt) may be given a security identifier, which is frequently referred to as a "secrecy level." In other words, the data may be classified into various secrecy levels that are reflective of the sensitivity of the data. For instance, top secret information might have the highest secrecy level, and only users having the highest secrecy level would thus be permitted to access top secret information.

Information within a given secrecy level may also be "categorised" for further restriction of access. As a hypothetical example, assume that, within a secrecy level designated "Top Secret," there exist three categories of information, "Top Secret-Grape," "Top Secret-Orange," and "Top Secret-Strawberry." Access to each category may be restricted to those having not only the requisite top-secret clearance but clearance for the particular category as well (e.g., on a need-to-know basis).

The term "secrecy class" is customarily defined as comprising a secrecy level and zero or more secrecy categories. In mediating access to memory, the security kernel may compare the secrecy class of a subject to the secrecy class of an object, and determine if the subject is allowed to access the object. In this manner, access to sensitive information can be limited to a select user group.

Two fundamental nondiscretionary rules help restrict access by users to information. These rules are the "simple security condition," which aims to prevent a subject from reading more highly classified objects; and the "*-property [pronounced 'star property']" rule, the goal of which is to prevent a subject from writing to less highly classified objects. Both are aimed at blunting attacks that might be deliberate (e.g., malicious or simply reckless) or accidental, and from a human user or from software.

The "simple security condition" can help prevent a user or a computer process from accessing (e.g., reading) data unless (a) his or its authorised secrecy level is greater or equal to the secrecy level of the information, and (b) his or its secrecy class includes all categories of the data in question.

The "*-property" rule (also called the "confinement property"), endeavours to prevent illicit indirect viewing of a first type or class of object through copying to a second type of object that has a lower secrecy level than the first object. The *-property addresses this by preventing a subject from writing to a second type of object (e.g., by copying information to the second object from the first object) unless (a) the secrecy level of the second type of object is greater than or equal to the secrecy level of the subject, and (b) the above-mentioned category clearances of the subject and objects are such that the writing operation is authorised. For example, an unclassified file might be unmodifiable by a top secret process to prevent top secret information from being copied to the unclassified file. Therefore, the security kernel prevents access by undesirable users, even if they are aided and abetted by "Trojan horse" software as discussed below.

Not only must the security kernel protect the computerised information from undesirable users, but also from undesirable software. Trojan horse software appears to be legitimate software, but in fact is designed to operate illicitly within the computer system. A Trojan horse may be implanted in commonly used software, and may access a user's files without the knowledge of the user. For instance, a Trojan horse could access a file, copy the file, and store the information in another file belonging to an unauthorised user. This could be a serious problem if the computer system contains highly sensitive information, because a Trojan horse is typically difficult to find, even after it has been functioning. Under the $*$-property of the security kernel, a program operating on behalf of a user should be prevented from passing information to any other user having a lower secrecy level.

Contributing to the potential problem is the fact that the terminal and its peripherals often include unsecured memory where information retrieved or input by the user or by Trojan horse "accessory" software can be stored. Trojan horse accessory software may be able secretly to load data into such memory; when the user switches from processing data in one secrecy level to processing data in a lower secrecy level, "spy" software on the computer might retrieve the data from the terminal's memory. Because of the unsecured nature of the terminal's memory, the Trojan horse accessory software could work in conjunction with spy software to access particular information, copy the information into the memory of the terminal, and retrieve the information for the benefit of an authorised user. (Information inadvertently left behind by "dupe" software could also be subject to retrieval by the spy software in this manner). Thus, information from the higher secrecy level could be subjected to unauthorised downgrading, i.e., made available to users having a lower secrecy level or who are not cleared for the category of information within the higher secrecy level.

Alternatively, even if Trojan horse software were not used to store particular information within the memory of the terminal, spy software might access the unsecured memory of the terminal and copy residual information stored in the memory into an unsecured file. For instance, spy software might access particular segments of the terminal's memory whenever a user logs onto a particular computer where spy software is functioning. If the user accessed important information during the previous session, then some of this information could be stored in a paste buffer or in a page memory of the terminal, and, therefore, could be obtained by the spy software.

Furthermore, "intelligent" terminals could be illicitly programmed to fool the user. For instance, if the user is accessing top secret information and viewing the information on the terminal's screen, the security kernel might be designed to command the terminal to display a "TOP SECRET" warning on the screen. However, the terminal might be programmed by Trojan horse software to display an "UNCLASSIFIED" warning instead (e.g., through the use of appropriately altered fonts wherein the words "TOP SECRET" are displayed in font characters that read "UNCLASSIFIED"), and therefore, can fool the user into thinking that the top secret information is unclassified. Hence, undesirable programs can adversely affect the fidelity of the display, thereby contributing to the improper downgrading of the information.

US-A-4591978 teaches a controlled system having an executor computer. The executory computer is so programmed as to make available on command from a master computer substantially all of the functions of a peripheral device on command, to prevent operator intrusion.

EP-A-0151714 teaches protection of secret information in an electronic storage medium which is enclosed in a housing protected against access. The housing contains one or more detector elements through which memory erasure is initiated when unauthorised access into the housing is detected.

EP-A-0326700 teaches a trusted path mechanism for virtual terminal environments which deals with running multiple virtual terminals. Without destroying the existing terminal processes, the invention in said publication establishes a trsuted path for the new virtual terminal, makes the new virtual terminal the current virtual terminal, and runs the given process in the new virtual terminal.

EP-A-0067611 discloses a method for controlling access to a computer from a remote terminal. Access is controlled by an interrogation of the terminal by an access controller interposed between the terminal and the computer. The access controller enables communication between the terminal and the computer only on receipt of a predetermined reply signal from the terminal and disconnects the terminal from the controller if the reply signal is incorrect or if no reply is received within a time limit.

The invention resides in method and a system which are computer operated with an associated peripheral device with a memory, for clearing the peripheral device memory to prevent unauthorized access to the memory, as defined in claims 1 and 11 respectively.

The peripheral device may be a terminal. The peripheral device is operably connected to the computer; for example, the peripheral device may be a terminal having a "page memory", a screen buffer, and so forth.

The memory of the peripheral device (e.g., a terminal) may be ordered to be cleared at various times when a potential for unauthorised information access exists. The memory of other associated "peripheral" devices (e.g., printers associated with the terminal) may also be cleared.

These memories may be cleared, for example, whenever the computer receives a predetermined signal from the terminal, such as a secure-attention interrupt (e.g., a BREAK signal), or on other occasions when communications are initiated or terminated over the secure communications path (e.g., at login or logout). Because no pertinent information remains in the terminal memory, nefarious software has a more difficult time breaking the security of the secure computing environment and accessing secured data; in addition, the amount of data left behind for scavenging by the nefarious software is reduced.

Clearing of these memories may be accomplished by sending suitable command sequences ("escape sequences") to the terminal from the computer.

A notable feature of the invention is the use of particular timings and special combination of command sequences to produce, e.g., keyboard locking, cursor positioning followed by cursor-position reporting, and the like. This helps reduce the chance that an irresponsible user (i.e., one acting either carelessly or maliciously) could "spoof" (i.e., defeat) the method by simulating the proper terminal responses.

Another notable feature of the invention is the provision of special terminal control software that is particularly adapted to cooperate in the performance of the security method and as part of the inventive system.

The present invention can be put into practice in various ways some of which will now be described by way of example with reference to the accompanying drawings in which:

Figure 1 illustrates some possibilities for multiple connections between a terminal and various processes that might be running on one or more machines;

Figure 2 illustrates typical connections between a terminal and a host computer;

Figure 3 is a hierarchical block diagram representing possible operating modes of various specific types of peripherals; and

Figures 4A and 4B are tables containing the Digital Equipment Corporation multinational character set.

## Illustrative Platform Architecture

An illustrative embodiment of the present invention is described by way of example with respect to a computer which supports various processes (e.g., virtual machines), each operating in a potentially different secrecy level, and which may operate in a multiuser environment.

### [a] Hardware

For purposes of illustration, the invention is described as it might be implemented on a VAX 8000-series computer operating in conjunction with one or more terminals of the VT series 100, 200, 300 or (novel) 400 types. The VAX computer and the terminals are available from Digital Equipment Corporation (DEC) or its authorised dealers.

It should be understood that the present invention is not limited to this type of computer system or configuration; it is merely used as an illustration of the present invention. Accordingly, the present invention may be practised on various types of computer systems including: PC networks, host networks, stand-alone multiuser computer systems, or single user computer systems.

### [b] Software Implementation

The invention may usefully be implemented by programming the computer to perform the functions described herein. The appendices at the end of this specification show a "pseudocode" program, in "structured English" format, of an exemplar design for a computer program in accordance with the invention. The pseudocode is intended as a general description and is not meant to be limiting.

For convenience of illustration, the pseudocode is broken down into a number of routines. However, those skilled in the art will appreciate that some of the routines may be combined, and others may be broken down still further, depending on the particular circumstances of implementation.

The actual optimum organisation and structure of a computer program in accordance with the invention will depend greatly on the characteristics of the system on which the invention is implemented. Certain functions described in the pseudocode may not be available on a given machine and must be simulated; or, a group of functions described herein may be able to be collapsed into fewer functions on another machine.

The pseudocode is only an outline and does not necessarily set forth a complete program listing. For example, testing for boundary conditions or errors is sometimes described explicitly in the pseudocode and sometimes is referred to implicitly. By and large, the pseudocode does not set forth error trapping/handling or similar functions.

It will be recognised by those of ordinary skill that, given the benefit of this disclosure, the implementation of a computer program on any given model of computer running any given architecture, to take advantage of the features of the computer and operating system, is a matter of conventional programming for those familiar with the particular computer and operating system.

## [c] Security Kernel Form of Implementation

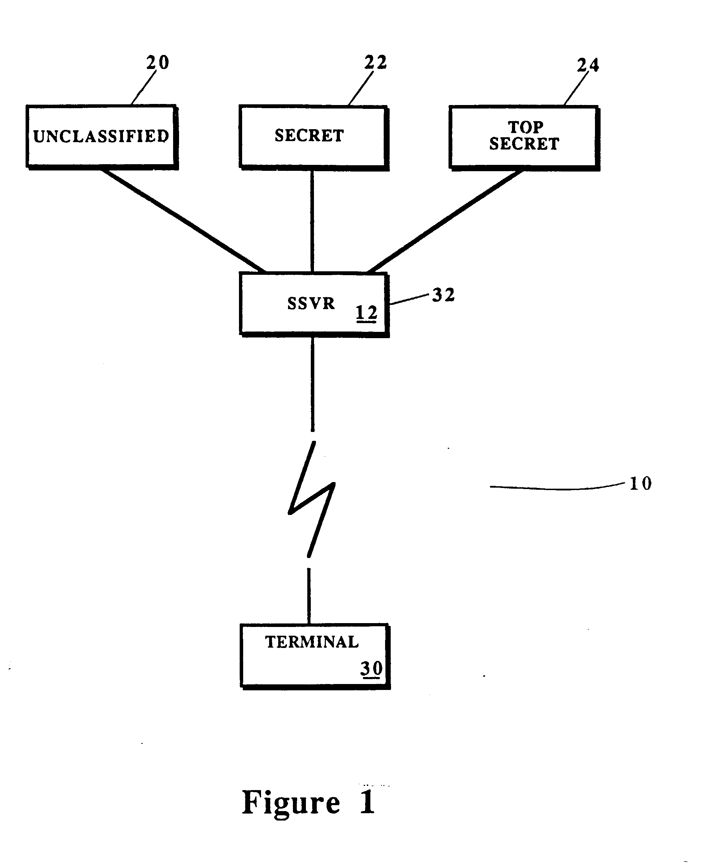

Figure 1 illustrates a computing environment which is generally designated by the reference numeral 10. The computing environment 10 is a kernel-based system which includes a "trusted" security kernel.

The security kernel may be implemented in software as described above. It implements the security policy for the computing environment 10, and controls access to all secure information stored within the computing environment 10. The security kernel includes a user interface that is referred to, for the purposes of this description, as a secure server (SSVR) 12. The security kernel is given protection against undesirable modifications. These functions of the security kernel and of the secure server 12 are generally well known in the art and will not be discussed in detail herein.

## [d] User-to-Host Connections

Users may access the computing environment 10 via a terminal 30. The terminal 30 is connected by suitable means to the secure server 12, e.g., directly or indirectly through a modem hookup or another computer, in a usual manner. As will be appreciated, if a terminal is connected through another computer or similar intermediary, the intermediary should be trustworthy to forward all communications unaltered in both directions; otherwise, the intermediary could mislead the security kernel into believing that the terminal has been reset and its memories cleared when in fact it has not.

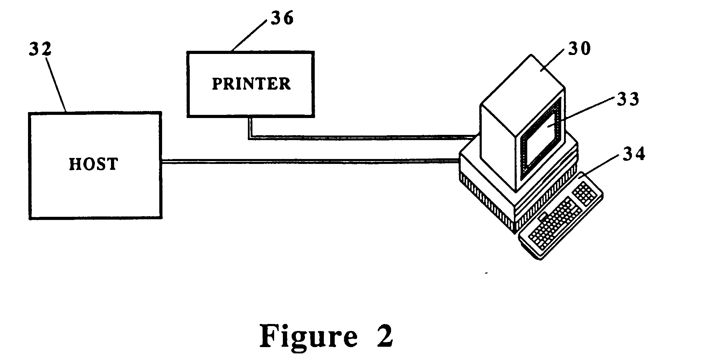

Figure 2 illustrates a terminal 30 that may be used within the computing environment 10. As illustrated, a host computer 32 is connected to the terminal 30, and the computing environment 10 is generally embodied within the host 32. A keyboard 34, or other input device, is also connected to the terminal 30, and allows a user to issue commands to the host computer 32. Typically, a printer 36 may be connected to the terminal 30, and allows screen images or files to be printed in the vicinity of the user. Similarly, a mouse or other input device as well as other known peripherals (not shown) may be connected to the terminal 30 in a conventional manner.

The terminal 30 and its peripherals (e.g., the printer 36) commonly include a certain amount of memory space. The terminal 30 may include, for example, a screen memory which contains the characters that are projected onto the screen 33 of the terminal 30; a "page memory" which contains several screen images; a paste buffer within which screen images may be saved until the user wishes to copy the image onto another screen or into another file; a terminal mode-settings memory for storing settings such as tab settings, margins, and the like; memory for storing temporary settings and terminal-state information such as cursor position and other frequently-changing characteristics; and other memory for various purposes.

Similarly, the terminal 30 (or the keyboard 34) may contain a prescribed amount of memory for user definable keys (UDK), such as function keys. The terminal 30 or keyboard 34 may also contain a keyboard buffer that stores a preselected number of key strokes until the keystrokes are delivered to the host 32.

Likewise, the printer 36 may include a certain amount of buffer memory that stores characters to be printed by the printer 36; control sequences that control the printer; font definitions; temporary settings; and the like.

## [e] General Operation of Secure Server

As shown in Figures 1 and 2, the secure server 12 mediates access between the terminal 30 and one or more selected processes (e.g., virtual machines) 20, 22, 24 operating on a host computer 32. The processes may take the form of multiple virtual machines or other processes, running on a single physical computer. In an alternative embodiment, the secure server 12 may be running on a terminal-switching machine which in turn is connected to a plurality of physical computers that are operating processes 20, 22, 24 (one or perhaps more than one process per computer), each computer (or each process) operating at a potentially different secrecy level, and each of which may operate in a multi-user manner.

For convenience, the processes 20, 22 and 24 are referred to simply as "processes", even though one or more of them may be running on different physical computers than others. As illustrated in Figure 1, the processes are classified into three groups: an unclassified process 20, a secret process 22, and a top secret process 24.

As noted above, access to the processes 20, 22, 24 is mediated by the secure server 12. The secure server 12 compares the respective secrecy levels and category clearances (e.g., "Top Secret-Grape" as hypothesised above) of the user and the terminal with those of the process being accessed by the terminal. If either the user or the terminal 30 is not allowed to access the requested process, then the secure server 12 sends a message to the terminal 30 informing the user that access has been denied.

**Occasions for Clearing Terminal Memories**

As discussed in more detail below, receipt of the secure-attention signal prompts the secure server 12 to clear those memories of the terminal 30 and any associated peripherals that are both readable and writable by the host, to prevent data stored in these memories from being accessed by spy software and to promote fidelity of display. After these memories are cleared, the user may interact with the secure server 12 so that the secure server 12 can determine if the user should be allowed access to another process or to properly login or logout the user.

It will be understood that in some embodiments, not all such memories will be clearable by the secure server 12. The secure server 12 may be nonetheless useful if it clears at least some such memories, because any such clearing of memories reduces the potential threat of unauthorised downgrading of information.

Because the secure server 12 contains trusted code, presumably no irresponsible software should be able secretly to store data in any of the unsecured memories. Nevertheless, when the user exits the secure server 12 and connects to a process 20, 22, 24, the secure server 12 clears the screen 33 to prevent spy software from obtaining information from e.g., the display buffer of the screen 33. The concern here is that the secure server 12 itself may have written highly classified or otherwise sensitive information to the terminal 30 (e.g., in an authorised display for an authorised user), and that this information could subsequently be illicitly read by other software.

Clearing of the memories need not necessarily take place every time the user switches from one process 20, 22, 24 to another. For instance, if the user switches from the unclassified process 20 to the top secret process 24, there may be no need to erase memories. No reason may exist for an irresponsible user to attempt to bypass security in copying data from an unclassified process to a top secret process, of course, because security policy normally does not preclude this kind of information transfer.

Therefore, in one illustrative example, the secure server 12 clears the memories of the terminal 30 and its peripherals when the user switches from a process having a given secrecy level or a particular category to a process having a lower secrecy level or lacking that category. However, the terminal should still be brought to a known state for fidelity of display purposes, i.e., so that the secure server 12 may display information properly.

Likewise, there may be no need to clear the terminal memories if the user presses the secure-attention (BREAK) key while connected only to the secure server 12 and not to a process 20, 22 or 24. However, clearing of memories upon login and logout may be desirable for prophylactic effect.

**Advantageous Utility Operations**

Before examining the operation of the security method itself, some advantageous "utility" operations will be discussed.

**[a] "Batch" Queries to and Responses from Terminal**

In the security method discussed herein, the secure server 12 periodically issues queries and sends other command sequences to the terminal 30. One-at-a-time reading and parsing of the terminal's responses would entail a waste of time because of transmission delays and the like. Furthermore, as total elapsed time in the security method increases, so does the chance that an irresponsible user could "spoof" the method.

Accordingly, in the illustrative method such queries and other command sequences are frequently "packaged" or "pipelined", i.e., a group (or "batch") of command sequences is sent in rapid succession without waiting for individual responses from the terminal. As the responses come back from the terminal, they are received into a suitable read buffer where they can be parsed at appropriate points in the execution of the security method, as indicated in the pseudocode. The buffer reading and parsing routines can include suitable conventional checks or tests (not discussed here) to ensure that only expected responses, in expected order, are received from the terminal.

If a group of command sequences being pipelined to the terminal 30 includes a terminal reset command, it is desirable to ensure that the terminal has adequate time to generate any expected responses to command sequences preceding the reset command. If the terminal is not given adequate time to respond, then the reset command could wipe out the terminal's keyboard buffer and prevent the response from being transmitted to the host computer 32. Accordingly, a timing method discussed below is used to address this issue.

### [b] "Fail" Processing

The operations discussed below may result in FAIL events for one reason or another (specific reasons are discussed here only briefly, because failure reasons will be largely dependent on the implementation platform and thus will be known to those of ordinary skill). For example, a FAIL event may occur because, when saved-up terminal responses are read and parsed, an abnormal or unexpected terminal response is noted.

Processing for such FAIL events can include appropriate security-promoting activities as desired. For example, upon a FAIL event the secure server 12 can send a "hard-reset" command sequence (discussed in more detail below) to the terminal 30 in an attempt to minimise any damage that could be caused by irresponsible software or even by a terminal malfunction. Depending on the nature of the FAIL event, it may be desirable to make a record of the event in an audit log, and/or to sound an alarm at a security station.

### [c] VERIFY TERMINAL STATE operation

From time to time throughout the performance of the security method, the secure server 12 attempts to verify that the terminal 30 is in a state or mode in which it will in fact perform as expected in response to reset commands and other memory-erasing commands. This verification reduces the likelihood of a user simulating or falsifying the terminal mode to avoid clearing the memories of the terminal and/or other peripherals.

Appendix B illustrates an exemplary VERIFY TERMINAL STATE process that entails sending a "batch" of particular command sequences. At step B.1, the secure server 12 sends a command sequence to position the cursor at a random or pseudorandom location on the screen of the terminal 30 by sending a (conventional) command sequence appropriate for the terminal. The secure server 12 then sends an appropriate (and also conventional) command sequence to query the terminal as to the cursor position, at step B.2.

(Mixed alphanumeric reference numerals represent specific steps in particular appendices to this specification; e. g., step A.1 refers to step 1 in Appendix A).

In this discussion, references to conventional terminal- or peripheral control sequences or command sequences are made. Such control sequences (e.g., ESC [2J as the ANSI-standard sequence for clearing a terminal screen, where "ESC" signifies the ESCAPE character) are well known in the art. The proper sequences for use in any given operation usually can be ascertained by consulting appropriate technical reference material for the terminal or peripheral in question.

During this process, the secure server 12 may hide the cursor on the screen so that the user cannot see it, and lock the keyboard 34 to make it more difficult for the user to simulate a response from the terminal 30 in response to the interrogation of the terminal 30 at step B.2.

It will be appreciated by those of ordinary skill that, in more general terms, the secure server 12 sends (perhaps randomly) variable information to the terminal 30 and subsequently requests that the terminal respond with a return signal that is dependent on the variable information. As an alternative to the cursor-position command sequences discussed above, the secure server 12 could equivalently send and subsequently request other information, e.g., the secure server could temporarily reprogram the terminal's "answerback" string and then request an answerback. Likewise, terminal-control software could be designed (as discussed in more detail below) to support decryption and subsequent reencryption of the variable information as described elsewhere in this specification.

At step B.3, the secure server 12 institutes what amounts to a predetermined time-out (discussed in more detail below). Because the terminal 30 has only a relatively short time to respond to the cursor positioning command and subsequent query, a user's opportunity to generate a forged response by typing fast is reduced.

The randomness of the cursor positioning noted above, and the timeout feature also described, help prevent an irresponsible terminal user from "spoofing" the verification process. Such a spoofing attempt could be made by a user at a terminal 30 that had display controls mode capability, in which the terminal can be put by the user into a mode that displays most command sequences sent to the terminal but does not execute them. In such a mode, an irresponsible user could observe the cursor positioning command, then respond to the position query by typing the appropriate response sequence. The timeout reduces the chance that the user could do so by fast manual typing; the random cursor positioning increases the difficulty of loading the proper response into a programmable function key for single keystroke response.

### [d] Timing Method for VERIFY TERMINAL STATE Operation

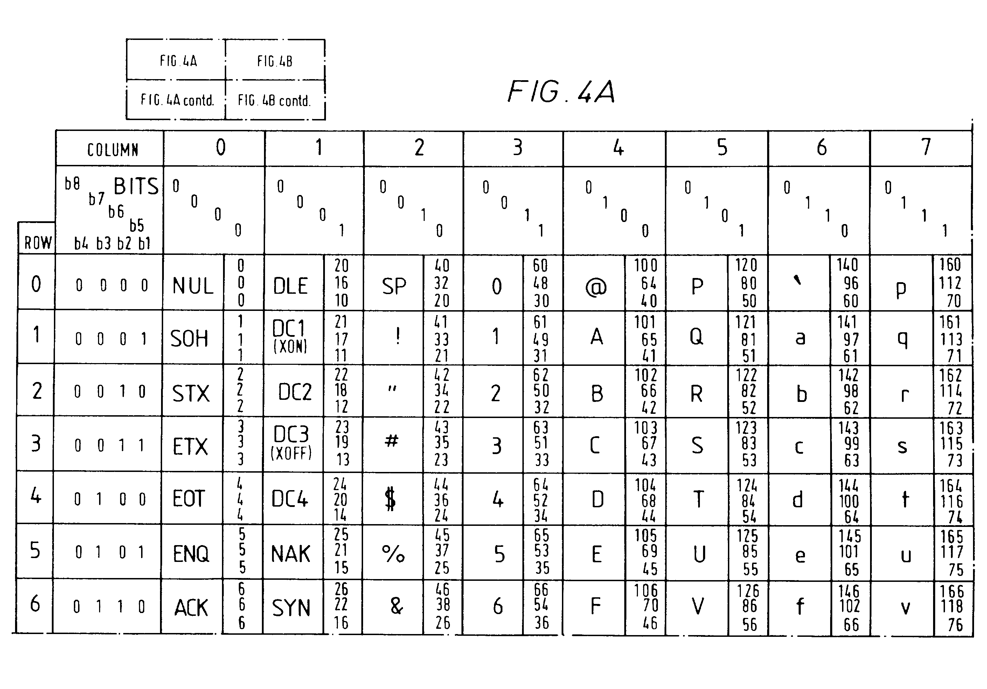

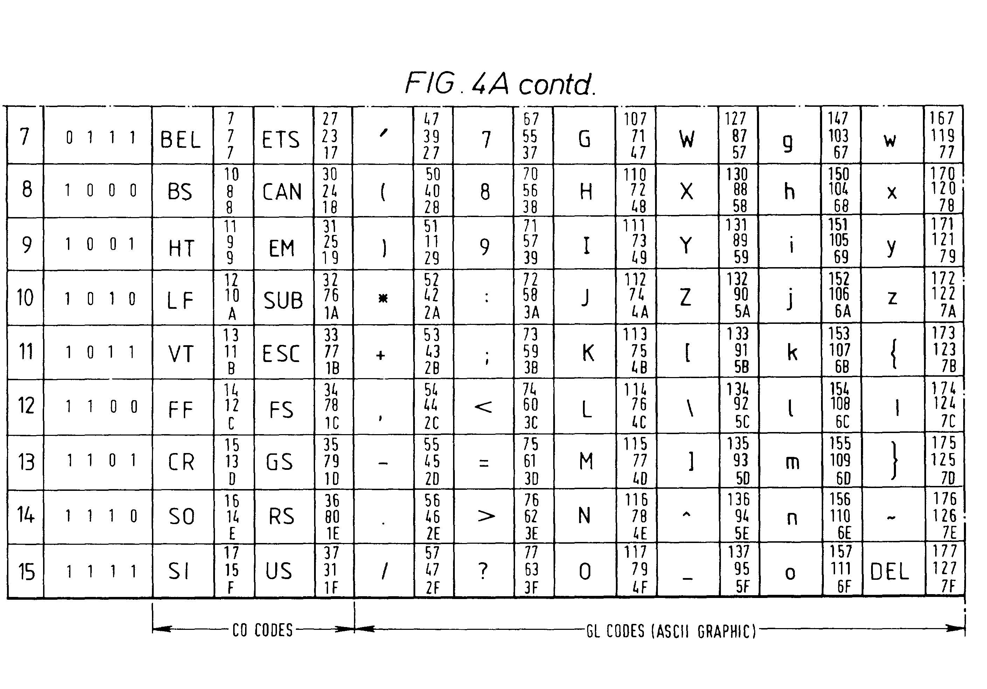

A useful method for generating an adaptive "timeout" in the VERIFY TERMINAL STATE operation involves pipelining a specified number of NUL commands to the terminal prior to sending the next command sequence down the pipeline or otherwise proceeding with the security method. NUL commands (see row 0, column 0 in Figure 4A.), of course, are ignored by the terminal when received and thus will neither affect the user's on-line session nor generate

7

a terminal response. Once the NUL commands have been sent, the next command sequence or other signal in the method can be sent to generate the next terminal response(s).

When unread responses in the read buffer are subsequently examined, the precise order of the responses can be reviewed. If the terminal's response to a cursor-position query occurs at the wrong point in the buffer, it may be surmised that the terminal failed to respond in time.

An example can usefully illustrate this sequence of events. In Appendix A, step A.4 shows that the VERIFY TERMINAL STATE command sequence is sent, followed at step A.5 by a command sequence to query whether a printer is in use at the terminal. In step A.6, the terminal-response buffer is read. If the terminal's response to the cursor-position query (sent in the VERIFY TERMINAL STATE command sequence) is recorded in the buffer after the response to the printer query instead of before the latter response as expected, then the cursor-position query response plainly was not received before the printer query was sent. Since the printer query was not sent until after the preselected sequence of NULs was completely sent, it stands to reason that the cursor-position response was not received before that time. In other words, the cursor-position response was not received before the "time-out" represented by completion of the NUL transmission.

A distinct advantage of using a NUL-string transmission as a timer is that it serves as a timer for both the secure server 12 and for the terminal 30, thus reducing the risk that a reset command to the terminal 30 will wipe out an unsent signal generated by the terminal in response to a previous command. As is well-known, many terminals can both receive data and transmit data more or less simultaneously. This can cause a problem if a reset command is received by the terminal 30 before it has completed transmitting a response to a previous command sequence.

For example: suppose that a command sequence of some kind (e.g, a cursor-position query as discussed above) is sent to the terminal 30 via the secure server 12 by the terminal 30, followed shortly thereafter by a "hard reset" command. Such a "sequence of command sequences" could occur in connection with steps E.1 through E.2 in Appendix E. A finite time is required for the terminal 30 to process the first command sequence, generate a response, and (depending on the terminal design) load the response into a keyboard buffer or similar buffer to await transmission back to the host computer 32. If the "hard reset" command were to be processed by the terminal 30 before the previous response had actually been sent, the response might never be sent because of the hard reset. The host 32 might thus incorrectly conclude that the previous command (e.g., the cursor-position query had not been completed and thus that the terminal 30 was not in the proper state to perform the "hard reset".

Even though the terminal 30 takes no action in response to the NUL sequence, it nevertheless takes a finite time for the terminal 30 to receive and parse the sequence, just as it takes a finite time for the host 32 to transmit the sequence. The transmission and reception operations, at the host 32 and terminal 30 respectively, thus serve as timers by keeping the host and terminal busy for an appropriate interval before proceeding with their respective next tasks.

The number of NUL commands in the sequence can accordingly be adjusted to give the terminal 30 adequate time to process and answer the cursor query in the VERIFY TERMINAL STATE command sequence. If the terminal 30 has not responded with the correct cursor position after the predetermined number of NUL commands has been transmitted, then the secure server 12 may conclude that the terminal is not in the desired state or mode.

Conceivably, a cursor-position query response could be returned in the (very short) interval between completion of the NUL-sequence transmission and the reception of the next expected terminal response. This would appear as a normal terminal response instead of one occurring after the time-out. The aforementioned interval, however, ordinarily will be very short, and so the chances of such a "false positive" result are regarded as acceptably low.

The risk of false positives may be reduced further by periodically redetermining the desired time-out interval. The specific number of NUL commands in the transmitted sequence may be varied with the latency of the network and thus could be redetermined from time to time as desired. For instance, because of the time needed to relay signals between intermediate communications systems, a line having a 9600 baud rate which is accessed remotely through several such intermediate systems may have an actual throughput (i.e., the actual performance) of a line having a 110 baud rate, i.e., considerably lower performance.

One approach to calculating a NUL-sequence length is to perform the following computation:

$$No.NULs = (\text{Terminal's query processing time}$$

$$+ \text{terminal's response transmission time})$$

$$* \text{terminal's NUL reception rate per unit time}$$

i.e., to add the respective times required for the terminal to transmit its response to the cursor-position query and for the terminal to process the query, and to send enough NULs to keep the terminal's read processes busy for that length of time before sending another command sequence to the terminal. (The terminal's transmission and reception rates will be affected by the performance characteristics of the communication channel between the terminal and the host computer 32, of course).

For example, it has been empirically determined that a 60-millisecond processing time is suitable for use with terminals of the Digital Equipment Corporation VT100, VT200 and VT300 series (although experimentation may be necessary to determine a suitable processing-time estimate for these or other terminals in particular communications configurations). To that time can be added the terminal's maximum expected response transmission time, computed by dividing the length (in characters) of the longest terminal response to the cursor-position query signal by the terminal's transmit rate (in characters per unit time). Finally, the number of NULs required to occupy the terminal for that length of time is determined by multiplying the total time required by the terminal's input (reception) rate per unit time. Expressed as an equation, the computation is :

$$No.NULs = (60 \text{ ms.} + [(\text{Char length of longest}$$

$$\text{response}) / \text{terminal transmission rate}])$$

$$* \text{ terminal's receive rate}$$

Thus, the maximum number of NUL commands occurs when the transmit baud rate is high (e.g., 19,200 bps) and the receive baud rate is low (e.g., 50 bps). This calculation assumes that the degradation of line performance is approximately the same in the outgoing direction (i.e., from the secure server 12 to the terminal 30) as in the incoming direction (vice versa); such an assumption and approximation is regarded as being adequate for present purposes. Of course, different approaches may be used for different computer systems in order to better model the characteristics of the different systems.

It should be understood that the security method described herein for clearing the terminal 30 and its peripherals 34, 36 may be implemented without the VERIFY TERMINAL STATE operation just described. No assurance exists that the terminal 30 and its peripherals 34, 36 were actually reset without some type of query and response.

## Response to Secure-Attention Keys

The secure server 12 may be designed so that activation of a secure-attention key, typically located on the keyboard 34 (e.g., in the form of the BREAK key), may establish a trusted path between the terminal 30 and the secure server 12. The secure server 12 normally passes all characters from the terminal 30 to the respective processes 20, 22 24 with which it is communicating. However, when the user depresses the secure-attention key, the secure server 12 may be designed to discontinue passing characters to the terminal, and to suspend the connection between the terminal and the respective process.

Upon receipt of the secure attention key interrupt at step A.1, the secure server 12 terminates any control string or command sequence that is in the process of being executed (e.g., by flushing the type-ahead buffer to throw away unread characters) and begins communication directly with the user via the terminal 30. For instance, the user may press a secure-attention key to notify the secure server 12 that the user wishes to access a different process.

## Bringing Terminal to Known-ANSI State

Following receipt of the secure attention interrupt (at step A.1), the secure server 12 transmits a series of command sequences to bring the terminal 30 to a known state.

An XON signal is transmitted to the terminal 30. As is known in the art, an XON signal is a conventional signal used to advise the terminal 30 that the secure server 12 is ready to receive data from the terminal. The XON signal is transmitted because of the possibility that irresponsible software (e.g., in a process 20, 22 or 24) might have sent an XOFF signal to the terminal, effectively disabling the terminal from sending signals back to the secure server 12.

The secure server 12 also sends a universal terminator signal to the terminal 30 (e.g., an "ST" character or an ESC \ character string), against the possibility that irresponsible software might have sent a partial command sequence to the terminal. If so, the secure server's transmission of other command sequences to the terminal 30 might have an unknown and possibly adverse affect on the terminal state.

In addition, the secure server 12 issues appropriate command sequences to bring the terminal 30 into a known-ANSI state in which the terminal 30 can recognise and process ANSI commands.

(Two kinds of "known states" are sometimes referred to here: The "known-ANSI" state in which it is known that the terminal will respond in a known manner to specific commands, e.g., ANSI-standard commands; and the stronger condition of a "fidelity of display" known state, in which the terminal is known to be in a mode in which proper display will occur in response to specific signals.)

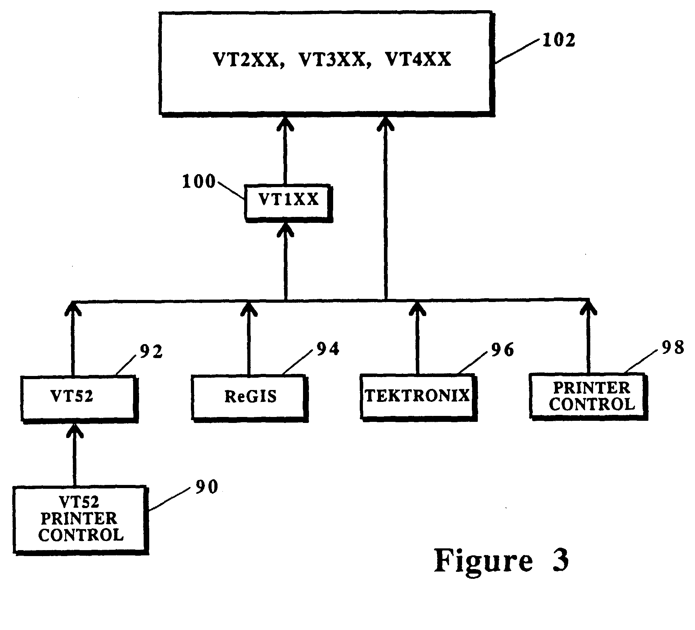

Referring to Figure 3, for example, DEC VT series 100, 200, 300 and (novel) 400 terminals, set forth in blocks 100 and 102, are capable of recognising and processing ANSI commands. If one of these terminals is emulating another terminal, such as a VT 52, a ReGIS graphics terminal 94, a Tektronix terminal 96, or if the terminal is in printer control mode 98, then these modes are exited to return the terminal to a known ANSI state.

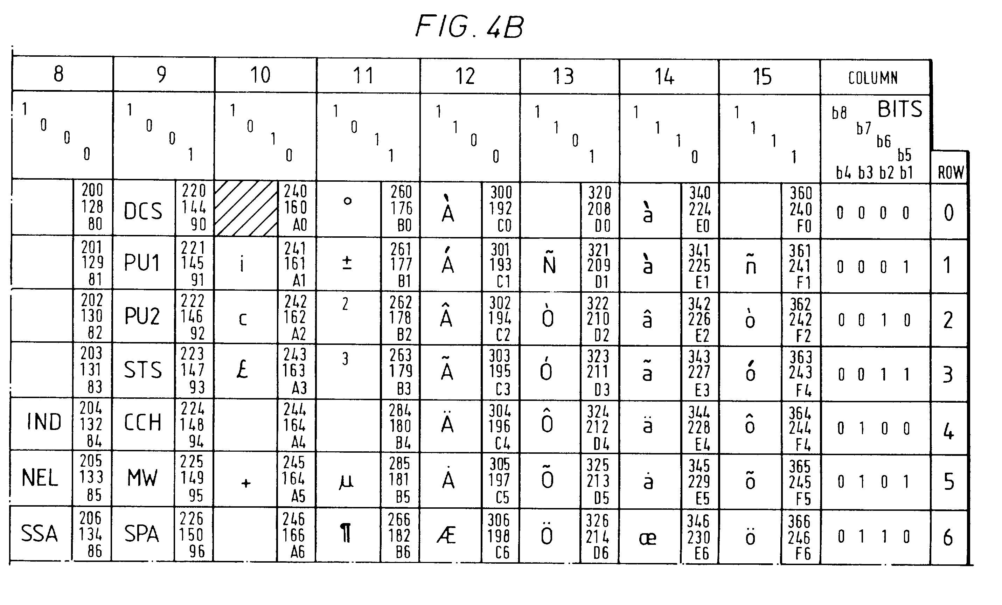

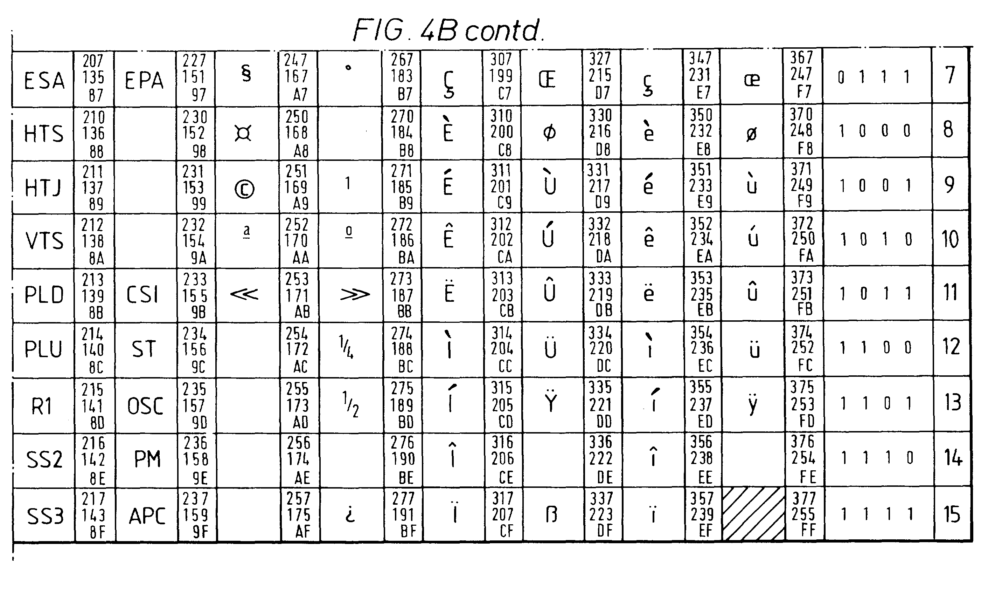

The secure server 12 can issue commands to the terminal 30 using any suitable convention. For the purposes of this illustration, the secure server 12 is assumed to use the DEC multinational character set reproduced in Figures 4A and 4B.

The sequence of command sequences may be designed to take various combinations of emulation modes into account. For example, it is possible that the terminal 30 is emulating a VT 52 terminal in printer controller mode as illustrated by block 90 in Figure 3. Against such a possibility, the secure server 12 should issue a control string to exit the VT 52 printer controller mode. Likewise, similar control sequences may be used to bring the terminal 30 out of other possible modes.

As an illustration, a useful combination of exit-mode command sequences, for a particular combination of terminal types of the kind shown in Figure 3, is illustrated in pseudocode in Appendix C. The command sequences may be issued in sequences other than as shown in Appendix C. Referring to the tree structure shown in Figure 3, the command sequence to exit any particular mode shown as a "leaf" of the tree should be issued prior to a command sequence for any other mode on the same "branch" of the tree. For example, the command to exit VT52 printer control mode (at block 90 in Figure 3, step C.1 in Appendix C) should be sent to the terminal 30 before the command to exit VT52 mode (block 92, step C.2).

Determining the proper combination of command sequences for other combinations of terminal types is a matter of routine for those of ordinary skill having the benefit of this disclosure. Such combinations, of course, must take into account the possibility that a command sequence to exit a particular mode may or may not be harmless if the terminal 30 is not in fact in that mode. The possibility that a particular command sequence may not have any effect in a given actual mode must also be taken into account. In some circumstances, it may be desirable to test the terminal 30 to determine what mode it is in (e.g., with appropriate command sequences that would produce different behaviour in different modes, as discussed below in connection with the dual-session capability issue).

**Peripheral Reset Attempt**

Once the terminal 30 is in a known ANSI state, the secure server 12 verifies the existence of a communications path between the host 32 and the terminal 30, at step A.4, using the VERIFY TERMINAL STATE operation discussed above. Thereafter, the terminal is queried to determine whether a printer or other peripheral is in use at the terminal, again using appropriate command sequences (step A.5).

If the foregoing query indicates that a printer or other peripheral is in use at the terminal 30, then appropriate command sequences are sent to reset the memories of the printer(s) or other peripheral(s), at step A.7. To reset the printer 36, for example, the secure server 12 may put the terminal 30 in printer controller mode. According to most conventional terminal programming, once the terminal 30 is in printer controller mode, it passes all commands from the secure server 12 to the printer 36, so a reset command is delivered to reset the printer 36. After the printer 36 is reset, the secure server 12 issues a command to the terminal 30 which causes the terminal 30 to exit the printer controller mode.

A similar process may be repeated to attempt to reset any other peripherals attached to the terminal 30, such as a mouse or other peripheral which has a local memory. The precise command sequences to be used for resetting any given peripheral (if any) frequently will be readily ascertainable from the specifications for the peripheral (e.g., technical reference manuals). For some terminals or other peripherals, however, careful study of the specifications will be required to determine just what functions are performed by a "reset"; a function called a "reset" on one terminal may or may not include erasure of memory areas that could be writable by Trojan horse "accomplice" or "dupe" software or that could be readable by "spy" software. For example, a given printer might have font memory that could be unaffected by a so-called "reset" command, and that could only be cleared by some other type of operation such as a font-download command or a memory-overwrite operation.

**Dual-Session Investigation**

Before attempting to reset the terminal 30, the secure server 12 may attempt to ascertain whether the terminal has dual session capability by sending a series of command sequences, at least one of which should indicate whether that capability exists at the terminal.

### [a] The Dual-Session Security Problem

The dual-session investigation is done because a particular problem exists in resetting terminals which are capable of being configured to run two or more sessions, such as terminals using Digital Equipment Corporation (DEC)'s multiple systems communications (MSC) or DEC session support utility (SSU). (These terminal features are explained in various reference manuals published by DEC for the well-known VT300-series terminals).

When dual-session capability is enabled, a variety of security problems may arise. For example, in an SSU-capable and -enabled terminal capable of supporting multiple processes on the same communications connection, the terminal will not completely reset its state in response to a reset command, thus potentially leaving a residue of information in the terminal memories for scavenging by unauthorised software. Furthermore, in an SSU-capable and -enabled terminal the BREAK key is processed differently than otherwise, meaning that the secure server 12 might not see a BREAK (i.e., secure-attention) signal if that key was pressed by a user.

Or, in an MSC-capable and -enabled terminal, the "paste" buffer allows a user conveniently to transfer information from one session to another. This capability could allow the user to save classified information from one process and to paste it into an unclassified process, thus downgrading the secrecy of the information. Thus, the very existence of the paste buffer constitutes a potential secrecy risk in dual-session mode. Such terminals also frequently have a session-swapping capability. That is, terminal memory that is initially allocated to, say, a top-secret session may be swappable by the user to be allocated to an unclassified session, allowing spy software in the unclassified session to retrieve the contents of the previously top-secret terminal memories.

### [b] "Black Box" Testing of Dual-Session Capability

The secure server 12 might have no _a priori_ knowledge of the terminal type. Against that possibility, the secure server 12 may send one or more test signals to determine whether the terminal has any dual-session capability enabled. (This testing exemplifies a "black box" approach that is used for several purposes in the method disclosed here. Generally speaking, in this approach the secure server 12 sends a series of one or more command sequences selected because the terminal 30's responses should vary with the characteristics of the terminal).

The novel terminal control software discussed below causes a terminal to respond to a query whether dual-session capability is enabled (and thus whether a dual session-capable terminal is currently in dual-session mode). Accordingly, as shown in Appendix D, the secure server 12 first sends such a query to the terminal 30.

The dual session-capable enablement of other terminals can be tested by sending one or more signals that will result in different behaviour if the terminal has such capability enabled than if it does not. For example, the terminal's available screen memory (in lines per page) in dual-session mode may be less than that in single-session mode. A command sequence may be sent to create a screen-memory allocation in excess of that which can be supported in dual-session mode, followed by a query about the lines-per-page memory allocation size. If the response to the query indicates that the page memory allocation is only half-size, that indicates that the terminal's dual-session capability is enabled.

If it is determined that the terminal 30 has a dual-session capability enabled (e.g., because it has been so configured by the user), then an indicator may be set that eventually results in a "hard" reset being sent to the terminal 30 by the secure server 12 as shown at step A.12. A dual-session indication may also result in the secure server refusing to proceed with a secure on-line session until the dual-session capability has been disabled. Likewise, the event may be audited, e.g., recorded by the secure server 12 in a security log, and the user's session terminated. The session is terminated because the security kernel may not be able to detect the secure attention interrupt, and because a high potential exists for the user to fool the secure server 12. For example, as noted above, the user might be able to conduct both a top-secret session and an unclassified session, and to illicitly copy information into the uncopied session by using the paste buffer or by swapping terminal memory allocations between the sessions; this could be something that the secure server 12 might not be able to detect if the terminal 30 did not signal the fact of the paste or swap.

### Issuance of Secure-Reset Command

As shown at step A.9, a secure-reset command sequence may be sent to the terminal 30 in case the terminal's control programming includes (novel) support for such a command. The terminal's operation in response to the command is discussed in more detail below.

### Conditional Issuance of Hard-Reset Command

A hard reset command is sent to the terminal 30 only in limited circumstances because of the effects of such a command. Typically, a successful hard-reset command is in many ways the software equivalent of turning off the power to the terminal (which is sometimes referred to informally as "the big red switch" action). A terminal's recovery from a hard reset usually involves clearing all memories, but it also usually involves a time-consuming self-test that can cause aggravating delays for users.

Accordingly, a hard reset command sequence is sent to the terminal 30 only when other memory-clearing operations have not apparently been successful. As shown at step A.12, this occurs if a secure-reset confirmation signal was not received from the terminal 30.

An illustrative hard-reset command sequence is set forth in Appendix E; certain of the functions mentioned in that appendix are discussed in more detail in the following subsections.

### [a] Random Delay and Random Verifications

At step E.1, a random or pseudorandom delay may be inserted to increase the difficulty of "spoofing" of the hard-reset operation. The delay can be accomplished in two parts, namely (a) waiting out the expiration of a random time interval (e.g., by setting a timer), and (b) sending a random number of VERIFY TERMINAL STATE command sequences to the terminal.

The purpose of this random delay is to reduce the chance that an irresponsible user could defeat a reset command sequence (discussed below) by putting the terminal in a SETUP mode (or a similar mode in which a reset command is not given effect by the terminal 30) after the last cursor-position command sequence at the conclusion of the VERIFY TERMINAL STATE command sequences. Both parts of the delay make it difficult for the user to know when to go to SETUP mode. If the user does so too early, the terminal 30 will fail to respond to a subsequent VERIFY TERMINAL STATE query sequence, and the secure server 12 will take appropriate FAIL action. If the user does so too late, the terminal 30 will receive the reset signal, defeating the user's intentions.

The maximum length of the random time interval is largely arbitrary (except that longer delays will undesirably irritate legitimate users and might motivate attempts to defeat the entire terminal memory-clearing operation). A random delay between 0 and 1 second has been found to be useful. The number of VERIFY TERMINAL STATE operations may usefully be randomly selected to be between 1 and 5 operations.

### [b] Testing for Completion of Hard Reset

Conventional terminals do not send signals reporting completion of hard-reset command processing (although some send an XON signal). The secure server 12 may test for completion by periodically sending a command sequence to lock the terminal keyboard and performing the VERIFY TERMINAL STATE operation for a predetermined time period. (The keyboard-locking sequence is desirable because the hard-reset command will eventually result in unlocking of the keyboard). If a connection is not verified prior to time-out, then it is assumed that the hard reset failed, and appropriate FAIL processing is invoked as discussed above.

### Test of Terminal 7- or 8- Bit Mode

If the reset (secure or hard) is successful, then for purposes of fidelity of display, the secure server 12 may send a series of test signals to determine whether the terminal 30 is in 7-bit or 8-bit mode.

The test signal series may include a query whether 7-or 8-bit mode is enabled, in case the terminal is of a type that can respond to such a query. The terminal may be programmed to respond differently to such a query depending on (1) its emulation status; e.g., a VT200 terminal in VT100 emulation mode may respond differently than it would if in its "native" mode; or (2) its C1 transmission mode, which determines whether an escape sequence begins with an ESC [ character string or the CSI character. Consequently, the query may be followed (after a VERIFY TERMINAL STATE operation) by a command to set the terminal 30 to 8-bit mode. A subsequent command sequence can then be sent to determine whether the first character of the terminal's response is an ESC [ character string (indicating 7-bit mode) or a CSI character (the 8-bit equivalent of ESC [). If the first character is CSI, then the terminal has 8-bit capability.

Optionally a "soft" reset command sequence may be sent, inasmuch as some terminal types are known to have bugs in their control software: a hard reset plus a soft reset may erase the terminal memories more completely than a hard reset alone. If the soft reset is sent, then another command sequence, to lock the keyboard and hide the cursor, is sent thereafter, because the soft reset frequently will unlock the keyboard and make the cursor visible.

Once the 7-bit or 8-bit mode status is determined, the terminal 30 may be set to any previous status indicated by the terminal's response to the query at step F.1. If the terminal 30 is not capable of using the 8-bit control characters, however, then the event may be audited if the secure server needs 8-bit display for fidelity.

**Special Problems Associated with Personal-Computer Terminal Emulators**

The terminal 30 may sometimes be a personal computer that is running a terminal-emulation program (as is common in the art). The personal computer will normally contain a large amount of random access memory and fixed disk memory, thus presenting special security problems.

In such a case, at least two options are available. First, all memory in the personal computer that is readable by "spy" software and writable by "accomplice" or "dupe" software could be erased in response to the secure-attention key. For apparent reasons, this option would not be without drawbacks, because all programs and data on the fixed disk might need to be erased. Second, the personal computer could contain trusted code (e.g., a security kernel) which appropriately mediates memory access within the personal computer, and which implements commands issued by the secure server 12.

**Special Control Programming for Terminals**

The above discussion alludes to the possibility of designing special terminal-control software to cooperate in the securing method described herein. Some illustrative examples of such programming are included below. Since the specific programming details might vary greatly with the type of terminal being supported, the programming is described in generally-applicable terms.

**[a] Support for Special Secure-Reset Command**

The terminal's programming may include routines to support a secure-reset command. These routines can in essence be largely the same as those supporting a conventional "hard" reset such as that performed by the DEC VT320 terminal, with certain exceptions as discussed below. An illustration of some of the functions that can be performed by such routines is provided in Appendix G.

Self-test routines (which cause time-consuming terminal self-tests) can be omitted. Likewise, conventional routines to drop communications line (i.e., to disconnect) upon reset should be omitted.

It is desirable for the secure-reset command to be an "exception" to certain modes that the terminal might assume. That is, the terminal should respond to the secure-reset command even when in modes that might not otherwise allow the terminal to respond to the command. The display controls mode mentioned above, for example, is such a mode; in the novel control programming disclosed here, the secure-reset command may be an "exception" to that mode in that the secure-reset command is not merely displayed instead of being executed, as are most other commands when in that mode. This exception status may optionally be omitted, however, with respect to modes that are easily exited through the sending of appropriate command sequences, e.g., VT52 mode, Tektronix mode, and printer control mode. The exception status may even be omitted with respect to other modes, to the extent that when in such modes the terminal 30 will not send a reset verification signal.

The terminal's setup parameters, screen memory, user-defined keys, and the like should be set to predetermined values that are independent of settings that a process 20, 22, or 24 may have attempted to make. For example, the setup parameters could be reset to power-up defaults such as factory preset values or values stored in nonvolatile RAM (NVR). These settings should be made as long as a user has the ability to dynamically change the association of sessions with the physical communication lines connecting the terminal to the host computer (e.g., through keyboard setup).

The terminal-control software may be provided with routines to support a save-state query from the secure server 12. The purpose of such a query could be to enable the secure server 12 to (1) interrogate the terminal 30 about its current state, e.g., user-configured terminal settings, to which the terminal would respond with a "dump" of information about those settings; (2) save the terminal-settings information prior to initiating the reset process described above; and (3) restore those settings (possibly subject to suitable safety testing) upon restoring the connection to the same process. This, of course, would reduce the potential user-perceived inconvenience of the reset operation, which might otherwise force the user to reconfigure the terminal settings after every such operation.

As noted above, as part of any secure on-line session, the secure server 12 verifies that the terminal 30 is in single-session mode (and indeed that any dual-session capability is not enabled). Consequently, a terminal that supports the secure-reset command and additionally supports dual-session capability need not reset both sessions in response to a secure-reset command, because by hypothesis only a single session is present.

If special dual-session support is provided (as discussed below), then the terminal should respond to the secure-reset command in either session.

**[b] Secure-Reset Completion Reporting**

Programming to report completion of the secure-reset operation may be included in the terminal control software. To reduce the chances of "spoofing" by a user, the control sequence for the secure reset command may include an argument, such as a random or pseudo-random number, to be returned in some form by the terminal upon completion of the secure-reset sequence. The return of the argument provides some assurance that it was indeed the terminal that generated the "secure-reset complete" signal and not the user, who normally cannot see the command sequences transmitted during the reset operation. (Because the terminal-control software is designed so that the secure-reset command is executed by the terminal even when the terminal is in display controls mode as discussed above, it is thus doubly difficult for the user to defeat that command). Likewise, the requirement that an argument be returned makes it more difficult for a Trojan horse to defeat the secure-reset command (because the Trojan horse would not be part of the secure server 12 and ordinarily would not have access to the specific value of the argument that would be required in order to return the argument to the secure server).

In a simple case, the secure-reset argument might be merely returned as-is by the terminal. If the secure server 12 did not receive a response to the secure-reset command that included the argument, that fact would indicate a possible attempt to "spoof" the server; the server might thereupon issue a "hard" reset to the terminal.

In a more sophisticated case, the terminal might be equipped (e.g., in a ROM installed at the factory) with a "public key" for encrypting selected transmissions to the secure server 12, and also with a "private key" for decrypting specified transmissions for the secure server 12. (Public keys and private keys are well known in the art of cryptography). "Registration" of the terminal 30 for access to the secure server 12 might entail providing the secure server with a public key corresponding to the terminal's private key. The argument to the secure-reset command could be the result of encryption by the secure server 12 of an alphanumeric sequence using the terminal's public key, to be decrypted by the terminal 30 using the terminal's private key. The terminal 30 would subsequently return the same alphanumeric sequence to the secure server 12, but this time encrypted with the secure server's public key. If decryption of the returned argument by the secure server 12 using the secure server's private key did not produce the same alphanumeric sequence, that fact would also indicate a possible spoof attempt.

A useful escape sequence for a secure-reset command includes the alphanumeric sequence:

$$ESC\ [n+p$$

as the secure-reset command itself, issued by the secure server 12, where n may be a random or pseudo-random number, and :

$$ESC\ [n*q$$

as the secure-reset confirmation signal, issued by the terminal 30 upon completion of the secure reset.

**[c] Dual-Session Security Support**

The control programming for such a specially designed terminal may be fashioned to support dual session-capable terminals and to provide extra assurance against possible dual session difficulties.

For example, the control programming could include routines to warn the secure server 12, and optionally to perform a complete reset of both sessions, whenever dual-session capability was enabled. The warning could be accomplished by causing the terminal to send a secure-attention signal if the user attempts to enable dual-session capability or to swap session memory allocations as described above (thus triggering the terminal resetting sequences described above).

More generally, the special terminal's design may include programming to warn the secure server 12 whenever the terminal is placed in an insecure or potentially insecure state.

In some circumstances, this control programming could also be designed so that the terminal's paste buffer is disabled and swapping of session assignments is disallowed whenever the terminal has dual-session capability enabled. Except at login time (when the terminal is initially untrustworthy), this programming variation would support an alternative to the secure server's 12 refusal to establish a secure session with a terminal that has dual-session capabilities enabled.

**[d] Secure-Attention Key Always Supported**

In the control programming for the terminal, the secure-attention key processing routines should always result in transmission of the secure-attention signal, so that a user can signal the secure server 12 even if the terminal has otherwise been disabled by some untrusted software within a process. This requirement is mostly met by the BREAK key, which is ordinarily transmitted by conventional terminals even if the terminal has been sent an XOFF signal by the host computer.

In some terminals, however, the BREAK key can be disabled in terminal setup by the user, and so the BREAK key is not necessarily detectable by the secure server 12 in all cases. For example, if the terminal is one that supports and is running in the SSU mode mentioned above, then the BREAK signal is encoded and might not be detectable. Programming of the terminal's BREAK key processing routines should be designed so that the BREAK key cannot be reprogrammed by host software of any kind.

**[e] Terminal ID Query Support**

The novel terminal-control software may be designed to transmit, upon request from the host 32 using a suitable command sequence, a unique serial number assigned at the factory during manufacture. This serial number may be used to verify that a specific physical terminal is being accessed. The serial number may be stored in a suitable non-volative memory (not shown), e.g., in a ROM or nonvolatile RAM that is located in a comparatively inaccessible place in the terminal (e.g., on a terminal logic board inside the terminal itself) to reduce the likelihood of tampering under normal operating conditions.

If the nonvolatile memory is a nonvolatile RAM (or a programmable ROM if the terminal includes suitable programming circuitry), then the control software may be designed so that, in the event of replacement of the logic board or failure of the nonvolatile memory, the serial number can be reset by the host using a suitable command sequence. Plainly, the conditions under which this can occur should be restricted; such restrictions can be imposed, e.g., by designing the control software to preclude resetting in this manner unless (a) a particular jumper wire combination (or other comparatively inaccessible hardware configuration) has been set on the logic board, or (b) an uninitialised or failed nonvolatile memory is detected by appropriate circuitry in the terminal. The latter feature may be used to set the serial number during manufacture, because the non-volatile memory will not have been previously initialised at that time.

**5. CONCLUSION**

While the invention is susceptible to various modifications and alternative forms, specific embodiments thereof have been shown and described by way of example. Different variations are plainly possible. For example, functions described above as performed by a programmed machine could alternatively (and equivalently) be performed by suitable discrete-logic circuitry, built out of individual components or in one or more integrated circuits, in a manner that is routine to those of ordinary skill. The reverse is also true, of course, namely that functions performed by hardware can alternatively (and equivalently) be performed by programmable general-purpose circuitry with suitable programming, again in a routine manner.

APPENDIX A: MAIN operation

A.1    Receive secure-attention key

A.2    Send XON and universal-terminator signals

A.3    Send KNOWN ANSI STATE command sequences

A.4    Send VERIFY TERMINAL STATE command sequences

A.5    Send command sequence to query terminal as to peripheral status (e.g., whether printer in use at terminal)

A.6    Read and parse unread buffered terminal responses; FAIL if any response abnormal (see text)

A.7    If terminal responses indicate that peripheral(s) (e.g., printer) are in use at terminal, send command sequences to reset it/them

A.8 Send DUAL-SESSION QUERY command sequences; FAIL if terminal response indicates that dual session capability is enabled

A.9 Send secure-reset command sequence

A.10 Send VERIFY TERMINAL STATE command sequences

A.11 Read and parse unread buffered terminal responses; FAIL if any response abnormal (see text)

A.12 Send HARD-RESET ATTEMPT command sequences if terminal response (if any) to secure-reset command sequence does not indicate successful terminal reset

A.13 Read and parse unread buffered terminal responses; FAIL if any response abnormal (see text)

A.14 Perform 7-8 BIT CAPABILITY operation

A.15 Read and parse unread buffered terminal responses; FAIL if any response abnormal (see text)

A.16 Send command sequences to home the terminal cursor, reveal the cursor, unlock the terminal keyboard

A.17 END

APPENDIX B: VERIFY TERMINAL STATE command sequences

B.1 Send command sequence to position terminal cursor at random location on terminal screen

B.2 Send command sequence to query terminal for cursor position

B.3 Send predetermined sequence of NUL characters

APPENDIX C KNOWN ANSI- STATE command sequence

C.1 Send command sequence to exit VT52 printer control mode

C.2 Send command sequence to exit VT52 mode

C.3 Send command sequence to exit Tektronix mode

C.4 Send command sequence to exit ReGIS mode

C.5 Send command sequence to exit ANSI printer control mode

APPENDIX D: DUAL-SESSION QUERY command sequences

D.1 Send VERIFY TERMINAL STATE command sequences

D.2 Send command sequence to query whether dual-session capability is enabled at terminal

D.3 Send VERIFY TERMINAL STATE command sequences

D.4 Send command sequence to reformat screen buffer to size not supported in dual-session mode (see text)

D.5 Send VERIFY TERMINAL STATE command sequences (optional)

D.6 Send command sequence to query terminal as to size of screen buffer (see text)

D.7 Send VERIFY TERMINAL STATE command sequences

APPENDIX E: HARD-RESET ATTEMPT operation

E.1    Send VERIFY TERMINAL STATE command sequences; wait random interval; repeat VERIFY TERMINAL STATE command sequences a random number of times

E.2    Send command sequence to cause terminal to initiate hard reset operation

E.3    Perform the following hard-reset completion test steps up to predetermined number of times:

   (a) Send command sequence to lock terminal keyboard

   (b) Send VERIFY TERMINAL STATE command sequences

   (c) Read and parse unread buffered terminal responses; cease test steps if responses indicate that reset is complete

APPENDIX F: 7-8 BIT CAPABILITY operation

F.1    Send command sequence to query whether terminal is in 7- or 8-bit mode

F.2    Send VERIFY TERMINAL STATE command sequences

F.3    Send command sequence to set terminal to 8-bit mode

F.4    Send query sequence that will result in terminal response (eventually to determine whether terminal answers in 8-bit or 7-bit mode)

F.5    Send "soft reset" command sequence (optional)

F.6    If soft reset sent, send command sequence to lock keyboard and disable cursor

F.7    Read and parse unread buffered terminal responses; FAIL if any response abnormal (see text)

F.8    Send command sequence to set terminal to 7- or 8-bit mode as indicated in terminal response of step F.1

APPENDIX G: Illustrative subset of SECURE-RESET routines

G.1    Clear user-definable key memory

G.2    Clear soft character-set memory

G.3    Clear screen and all off-screen (page) memory

G.4    Return cursor to upper left corner (page 1)

G.5    Reset scroll margins

G.6    Reset origin mode absolute

G.7    Set select graphic rendition (SGR) state to normal

G.8    Set selective-erase attribute to write "not selective eraseable"

G.9    Set all character sets to defaults

G.10   Clear all macro definitions

G.11   Erase paste buffer

G.12 Reinitialize keyboard state

G.13 Reinitialize ANSI parser

G.14 Replace all other set-up parameters by NVR defaults, or if no NVR defaults, to power-up default values.

G.15 If optional argument included in Secure-Reset command sequence, send Secure-Reset confirmation report

## Claims

1. A method of ensuring clearing of a peripheral device memory which peripheral device co-operates with a computer, to prevent unauthorized access to information contained in said peripheral device memory, said method comprising:

   performing the following steps (i) to (iii) a predetermined number of times:

   i) first, sending by the computer to the peripheral device a first command sequence including one of a plurality of variable information, said peripheral device performing one of a plurality of known operations in response to said command sequence including respective one of a plurality of variable information,
   ii) second, sending by the computer to the peripheral device a second command sequence to query the peripheral device on the result of performance of said one of plurality of known operations, and
   iii) third, sending by the computer to the peripheral device a random number of null operations to give the peripheral device adequate time to respond to the second command sequence before the next first command sequence is sent, that is before returning to the step of (i);

   wherein one of the first command sequence includes a reset command in response to which said peripheral device clears its memory, the method further including the steps of:

   checking by computer that expected responses are received from the peripheral device in the expected order; and
   in the absence of an expected response, performing a "hard-reset" operation, by clearing said peripheral device memory and in addition choosing from turning off and interrupting power to the peripheral device, and locking a keyboard which is cooperating with said peripheral device, wherein the expected order of receipt of the responses is the same order as that in which the corresponding second command sequences were sent.

2. A method as claimed in claim 1, wherein the peripheral device is a terminal.

3. A method as claimed in claim 2, wherein the memory comprises a page memory and/or a screen buffer.

4. A method as claimed in claim 2 or 3 in which the computer sends a command signal to the terminal in response to the predetermined signal from the terminal and then sends a command query signal to verify whether the command has been carried out by the terminal.

5. A method as claimed in claim 4 in which the command signal is a cursor position command.

6. A method as claimed in claim 4 or 5 in which the computer sends a keyboard lock signal and/or a screen cursor deletion signal after the command signal.

7. A method as claimed in claim 3, 4 or 5 in which the nature of the said command signal is pseudo-randomly generated.

8. A method as claimed in any of claims 4 to 7 in which the computer provides a predetermined period for response to a command query signal.

9. A method as claimed in claim 8 in which the period for response is constituted by the random number of null operations sent by the computer to the terminal.

**10.** A method as claimed in claim 9, wherein the predetermined signal is a secure-attention key command or a log in or log out command.

**11.** A computer operated system for ensuring clearing of a peripheral device memory to prevent unauthorized access to information contained in said memory, the peripheral device being connected to co-operate with the computer, said system comprising:

A) first means to send a first command sequence including one of a plurality of variable information, from said computer to said peripheral device, said peripheral device having means to perform one of a plurality of known operations in response to said command sequence;

B) second means to send a second command sequence from the computer to the peripheral device to query the peripheral device on the result of performance of said one of plurality of known operations;

C) means for sending from the computer to the peripheral device, a random number of null operations to give the peripheral device adequate time to respond to the second command sequence before a next command sequence is sent by said first means; said system further comprising means in said computer for checking that expected responses are received from the peripheral device in the expected order; and means for performing a "hard-reset" operation in the absence of an expected response by clearing said peripheral device memory and in addition choosing from turning off and interrupting power to the peripheral device and locking a keyboard which is cooperating with said peripheral device, wherein the expected order of receipt of the responses is the same order as that in which the corresponding second command sequences were sent.

**Patentansprüche**

**1.** Verfahren zum Sicherstellen des Löschens eines Speichers einer peripheren Vorrichtung, die mit einem Computer zusammenarbeitet, um unberechtigten Zugriff auf Informationen zu verhindern, die in dem Speicher der peripheren Vorrichtung enthalten sind, wobei das Verfahren beinhaltet:

Ausführen der folgenden Schritte (i) bis (iii) eine vorgegebene Anzahl von Malen:

i) erstens, Senden einer ersten Befehlssequenz einschließlich einer Information aus einer Vielzahl variabler Informationen durch den Computer zur peripheren Vorrichtung, wobei die periphere Vorrichtung in Reaktion auf die Befehlssequenz, die die jeweilige Information aus der Vielzahl variabler Informationen beinhaltet, eine Operation aus einer Mehrzahl bekannter Operationen durchführt,

ii) zweitens, Senden einer zweiten Befehlssequenz durch den Computer zur peripheren Vorrichtung, um die periphere Vorrichtung in Bezug auf das Ergebnis der Durchführung der einen Operation aus der Mehrzahl bekannter Operationen abzufragen, und

iii) drittens, Senden einer zufälligen Anzahl von Nulloperationen durch den Computer zur peripheren Vorrichtung, um der peripheren Vorrichtung eine angemessene Zeit zu gewähren, um auf die zweite Befehlssequenz zu antworten, bevor die nächste erste Befehlssequenz gesendet wird, d.h. vor der Rückkehr zum Schritt (i);

wobei eine der ersten Befehlssequenzen einen Rücksetzbefehl aufweist, auf den hin die periphere Vorrichtung ihren Speicher löscht, wobei das Verfahren weiterhin die Schritte aufweist,

Überprüfen durch den Computer, daß von der peripheren Vorrichtung erwartete Antworten in der erwarteten Reihenfolge empfangen werden; und,

bei Fehlen einer erwarteten Antwort, Durchführen einer "Härterücksetz"-Operation, indem der Speicher der peripheren Vorrichtung gelöscht, darüber hinaus der Strom zur peripheren Vorrichtung wahlweise abgeschaltet oder unterbrochen und eine Tastatur gesperrt wird, die mit der peripheren Vorrichtung zusammenarbeitet, wobei die erwartete Antwortempfangsreihenfolge dieselbe Reihenfolge ist wie die, in der die entsprechenden zweiten Befehlssequenzen gesendet wurden.

**2.** Verfahren nach Anspruch 1, bei dem die periphere Vorrichtung ein Endgerät ist.

**3.** Verfahren nach Anspruch 2, bei dem der Speicher einen Seitenspeicher und/oder einen Bildschirmpufferspeicher aufweist.

**4.** Verfahren nach Anspruch 2 oder 3, bei dem der Computer in Reaktion auf das vorgegebene Signal vom Endgerät ein Befehlssignal an das Endgerät und anschließend ein Befehlsabfragesignal sendet, um zu verifizieren, ob der Befehl vom Endgerät ausgeführt worden ist.

**5.** Verfahren nach Anspruch 4, bei dem das Befehlssignal ein Cursor-Positionsbefehl ist.

**6.** Verfahren nach Anspruch 4 oder 5, bei dem der Computer nach dem Befehlssignal ein Tastatur-Sperrsignal und/oder ein Bildschirmcursor-Löschungssignal sendet.

**7.** Verfahren nach Anspruch 3, 4 oder 5, bei dem die Art des Befehlssignals pseudostatistisch erzeugt wird.

**8.** Verfahren nach einem der Ansprüche 4 bis 7, bei dem der Computer eine vorgegebene Zeitdauer zur Antwort auf ein Befehlsabfragesignal gewährt.

**9.** Verfahren nach Anspruch 8, bei dem die Zeitdauer zur Antwort aus der zufälligen Anzahl von Nulloperationen gebildet wird, die vom Computer zum Endgerät gesendet wurden.

**10.** Verfahren nach Anspruch 9, bei dem das vorgegebene Signal ein Sicherheitsunterbrechungs-Tastenbefehl oder ein Login- oder Logout-Befehl ist.

**11.** Computerbetriebenes System zum Sicherstellen des Löschens eines Speichers einer peripheren Vorrichtung, um unberechtigten Zugriff auf Informationen zu verhindern, die in dem Speicher enthalten sind, wobei die periphere Vorrichtung dazu dient, mit einem Computer zusammenzuarbeiten, und das System folgendes aufweist:

A) eine erste Einrichtung zum Senden einer ersten Befehlssequenz einschließlich einer Information aus einer Vielzahl variabler Informationen vom Computer zur peripheren Vorrichtung, wobei die periphere Vorrichtung eine Einrichtung aufweist, um in Reaktion auf die Befehlssequenz eine Operation aus einer Mehrzahl bekannter Operationen durchzuführen,
B) eine zweite Einrichtung zum Senden einer zweiten Befehlssequenz vom Computer zur peripheren Vorrichtung, um die periphere Vorrichtung in Bezug auf das Ergebnis der Durchführung der einen Operation aus der Mehrzahl bekannter Operationen abzufragen, und
C) eine Einrichtung zum Senden einer zufälligen Anzahl von Nulloperationen vom Computer zur peripheren Vorrichtung, um der peripheren Vorrichtung eine angemessene Zeit zu gewähren, um auf die zweite Befehlssequenz zu antworten, bevor durch die erste Einrichtung eine nächste erste Befehlssequenz gesendet wird;

wobei das System weiterhin in dem Computer eine Einrichtung zum Überprüfen aufweist, daß von der peripheren Vorrichtung erwartete Antworten in der erwarteten Reihenfolge empfangen werden; und eine Einrichtung zum Durchführen einer "Härterücksetz"-Operation bei Fehlen einer erwarteten Antwort, indem der Speicher der peripheren Vorrichtung gelöscht, darüber hinaus der Strom zur peripheren Vorrichtung wahlweise abgeschaltet oder unterbrochen und eine Tastatur gesperrt wird, die mit der peripheren Vorrichtung zusammenarbeitet, wobei die erwartete Antwortempfangsreihenfolge dieselbe Reihenfolge ist wie die, in der die entsprechenden zweiten Befehlssequenzen gesendet wurden.

## Revendications

**1.** Procédé pour assurer l'effacement d'une mémoire d'un dispositif périphérique coopérant avec un ordinateur, afin d'empêcher un accès non autorisé à des informations contenues dans la mémoire dudit dispositif périphérique, le procédé comprenant :

l'exécution, un nombre prédéterminé de fois, des étapes (i) à (iii) suivantes :

i) premièrement, d'envoi par l'ordinateur au dispositif périphérique d'une première séquence d'ordres comprenant l'une de multiples informations variables, ledit dispositif périphérique exécutant l'une de multiples opérations connues en réponse à ladite séquence d'ordres comprenant l'information variable correspondante parmi lesdites multiples informations variables,
ii) deuxièmement, d'envoi par l'ordinateur au dispositif périphérique d'une seconde séquence d'ordres pour interroger celui-ci sur le résultat de l'exécution de l'opération connue parmi lesdites multiples opérations connues, et

iii) troisièmement, d'envoi par l'ordinateur au dispositif périphérique d'un nombre aléatoire d'opérations nulles afin de donner à celui-ci suffisamment de temps pour répondre à la séquence d'ordres avant l'envoi de la première séquence d'ordres suivante, c'est-à-dire avant un retour à l'étape (i);

l'une des premières séquences d'ordres comprenant un ordre de remise à zéro en réponse auquel ledit dispositif périphérique efface sa mémoire, le procédé comprenant, en outre, les étapes de :

vérification par l'ordinateur que des réponses attendues sont reçues du dispositif périphérique dans l'ordre attendu; et

en l'absence d'une réponse attendue, d'exécution d'une opération de "remise à zéro imposée", par l'effacement de la mémoire dudit dispositif périphérique et le choix, de surcroît, entre une mise hors circuit et une interruption de l'alimentation de celui-ci, et un verrouillage d'un clavier coopérant avec ledit dispositif périphérique, l'ordre attendu de réception des réponses étant le même que celui dans lequel les secondes séquences d'ordres correspondantes ont été envoyées.

2. Procédé tel que défini dans la revendication 1, selon lequel le dispositif périphérique est un terminal.

3. Procédé tel que défini dans la revendication 2, selon lequel la mémoire comprend une mémoire à pages et/ou un tampon d'image-écran.

4. Procédé tél que défini dans la revendication 2 ou 3, selon lequel l'ordinateur envoie un signal d'ordre au terminal en réponse au signal prédéterminé provenant de ce dernier, puis envoie un signal d'interrogation d'ordre pour vérifier si l'ordre a été exécuté par le terminal.

5. Procédé tel que défini dans la revendication 4, selon lequel le signal d'ordre est un ordre de position de curseur.

6. Procédé tel que défini dans la revendication 4 ou 5, selon lequel l'ordinateur envoie un signal de verrouillage de clavier et/ou un signal de suppression de curseur d'écran après le signal d'ordre.

7. Procédé tel que défini dans la revendication 3, 4 ou 5, selon lequel la nature dudit signal d'ordre est générée de manière pseudo-aléatoire.

8. Procédé tel que défini dans l'une quelconque des revendications 4 à 7, selon lequel l'ordinateur laisse une période prédéterminée pour répondre à un signal d'interrogation d'ordre.

9. Procédé tel que défini dans la revendication 8, selon lequel la période de réponse est constituée par le nombre aléatoire d'opérations nulles envoyé par l'ordinateur au terminal.

10. Procédé tel que défini dans la revendication 9, selon lequel le signal prédéterminé est un ordre de touche de signalisation de protection ou un ordre de procédure de connexion ou de déconnexion.

11. Système commandé par ordinateur pour assurer l'effacement d'une mémoire d'un dispositif périphérique afin d'empêcher un accès non autorisé à des informations contenues dans ladite mémoire, le dispositif périphérique étant relié pour coopérer avec l'ordinateur, ledit système comprenant :

A) des premiers moyens pour envoyer une première séquence d'ordres comprenant l'une de multiples informations variables, dudit ordinateur audit dispositif périphérique, ledit dispositif périphérique comportant des moyens pour exécuter l'une de multiples opérations connues en réponse à ladite séquence d'ordres;

B) des seconds moyens pour envoyer une seconde séquence d'ordres de l'ordinateur au dispositif périphérique afin d'interroger ce dernier sur le résultat de l'exécution de ladite opération connue parmi lesdites multiples opérations connues;

C) des moyens pour envoyer de l'ordinateur au dispositif périphérique un nombre aléatoire d'opérations nulles afin de donner au dispositif périphérique suffisamment de temps pour répondre à la seconde séquence d'ordres avant l'envoi d'une séquence d'ordres suivante par lesdits premiers moyens; ledit système comprenant, en outre, des moyens prévus dans ledit ordinateur pour vérifier que des réponses attendues sont reçues du dispositif périphérique dans l'ordre attendu; et des moyens pour exécuter une opération de "remise à zéro imposée" en l'absence d'une réponse attendue en effaçant la mémoire dudit dispositif périphérique et en choisissant, de surcroît, entre une mise hors circuit et une interruption de l'alimentation du dispositif périphérique et un verrouillage d'un clavier coopérant avec ledit dispositif périphérique, l'ordre attendu de réception des réponses étant le même que celui dans lequel les secondes séquences d'ordres correspondantes ont été envoyées.

Figure 1

**32** **36** **30** **33** **34**

PRINTER

HOST

# Figure 2

Figure 3

EP 0 436 365 B1

| FIG. 4A | FIG. 4B |
| --- | --- |
| FIG. 4A contd. | FIG. 4B contd. |

## FIG. 4A

| COLUMN | | 0 | | 1 | | 2 | | 3 | | 4 | | 5 | | 6 | | 7 | |
| --- | --- | --- | --- | --- | --- | --- | --- | --- | --- | --- | --- | --- | --- | --- | --- | --- | --- |
| b8 b7 b6 b5 BITS / ROW / b4 b3 b2 b1 | | 0 0 0 0 | | 0 0 0 1 | | 0 0 1 0 | | 0 0 1 1 | | 0 1 0 0 | | 0 1 0 1 | | 0 1 1 0 | | 0 1 1 1 | |
| 0 | 0 0 0 0 | NUL | 0 0 0 | DLE | 20 16 10 | SP | 40 32 20 | 0 | 60 48 30 | @ | 100 64 40 | P | 120 80 50 | ` | 140 96 60 | p | 160 112 70 |
| 1 | 0 0 0 1 | SOH | 1 1 1 | DC1 (XON) | 21 17 11 | ! | 41 33 21 | 1 | 61 49 31 | A | 101 65 41 | Q | 121 81 51 | a | 141 97 61 | q | 161 113 71 |
| 2 | 0 0 1 0 | STX | 2 2 2 | DC2 | 22 18 12 | " | 42 34 22 | 2 | 62 50 32 | B | 102 66 42 | R | 122 82 52 | b | 142 98 62 | r | 162 114 72 |
| 3 | 0 0 1 1 | ETX | 3 3 3 | DC3 (XOFF) | 23 19 13 | # | 43 35 23 | 3 | 63 51 33 | C | 103 67 43 | S | 123 83 53 | c | 143 99 63 | s | 163 115 73 |
| 4 | 0 1 0 0 | EOT | 4 4 4 | DC4 | 24 20 14 | $ | 44 36 24 | 4 | 64 52 34 | D | 104 68 44 | T | 124 84 54 | d | 144 100 64 | t | 164 116 74 |
| 5 | 0 1 0 1 | ENQ | 5 5 5 | NAK | 25 21 15 | % | 45 37 25 | 5 | 65 53 35 | E | 105 69 45 | U | 125 85 55 | e | 145 101 65 | u | 165 117 75 |
| 6 | 0 1 1 0 | ACK | 6 6 6 | SYN | 26 22 16 | & | 46 38 26 | 6 | 66 54 36 | F | 106 70 46 | V | 126 86 56 | f | 146 102 66 | v | 166 118 76 |

## FIG. 4A contd.

| | | | | | | | | | | | | | | | | | | |
|---|---|---|---|---|---|---|---|---|---|---|---|---|---|---|---|---|---|---|
| 7 | 0 1 1 1 | BEL | 7<br>7<br>7 | ETS | 27<br>23<br>17 | ' | 47<br>39<br>27 | 7 | 67<br>55<br>37 | G | 107<br>71<br>47 | W | 127<br>87<br>57 | g | 147<br>103<br>67 | w | 167<br>119<br>77 |
| 8 | 1 0 0 0 | BS | 10<br>8<br>8 | CAN | 30<br>24<br>18 | ( | 50<br>40<br>28 | 8 | 70<br>56<br>38 | H | 110<br>72<br>48 | X | 130<br>88<br>58 | h | 150<br>104<br>68 | x | 170<br>120<br>78 |
| 9 | 1 0 0 1 | HT | 11<br>9<br>9 | EM | 31<br>25<br>19 | ) | 51<br>11<br>29 | 9 | 71<br>57<br>39 | I | 111<br>73<br>49 | Y | 131<br>89<br>59 | i | 151<br>105<br>69 | y | 171<br>121<br>79 |
| 10 | 1 0 1 0 | LF | 12<br>10<br>A | SUB | 32<br>76<br>1A | * | 52<br>42<br>2A | : | 72<br>58<br>3A | J | 112<br>74<br>4A | Z | 132<br>90<br>5A | j | 152<br>106<br>6A | z | 172<br>122<br>7A |
| 11 | 1 0 1 1 | VT | 13<br>11<br>B | ESC | 33<br>77<br>1B | + | 53<br>43<br>2B | ; | 73<br>59<br>3B | K | 113<br>75<br>4B | [ | 133<br>91<br>5B | k | 153<br>107<br>6B | { | 173<br>123<br>7B |
| 12 | 1 1 0 0 | FF | 14<br>12<br>C | FS | 34<br>78<br>1C | , | 54<br>44<br>2C | < | 74<br>60<br>3C | L | 114<br>76<br>4C | \ | 134<br>92<br>5C | l | 154<br>108<br>6C | \| | 174<br>124<br>7C |
| 13 | 1 1 0 1 | CR | 15<br>13<br>D | GS | 35<br>79<br>10 | – | 55<br>45<br>2D | = | 75<br>61<br>3D | M | 115<br>77<br>4D | ] | 135<br>93<br>5D | m | 155<br>109<br>6D | } | 175<br>125<br>7D |
| 14 | 1 1 1 0 | SO | 16<br>14<br>E | RS | 36<br>80<br>1E | . | 56<br>46<br>2E | > | 76<br>62<br>3E | N | 116<br>78<br>4E | ^ | 136<br>94<br>5E | n | 156<br>110<br>6E | ~ | 176<br>126<br>7E |
| 15 | 1 1 1 1 | SI | 17<br>15<br>F | US | 37<br>31<br>1F | / | 57<br>47<br>2F | ? | 77<br>63<br>3F | O | 117<br>79<br>4F | _ | 137<br>95<br>5F | o | 157<br>111<br>6F | DEL | 177<br>127<br>7F |

CO CODES — GL CODES (ASCII GRAPHIC)

EP 0 436 365 B1

EP 0 436 365 B1

## FIG. 4B

| COLUMN | 8 | 9 | 10 | 11 | 12 | 13 | 14 | 15 | BITS (b8 b7 b6 b5 / b4 b3 b2 b1) | ROW |
|---|---|---|---|---|---|---|---|---|---|---|
| BITS | 1 0 0 0 | 1 0 0 1 | 1 0 1 0 | 1 0 1 1 | 1 1 0 0 | 1 1 0 1 | 1 1 1 0 | 1 1 1 1 | b4 b3 b2 b1 | |
| 0 | 200 128 80 | DCS 220 144 90 | (hatched) 240 160 A0 | ° 260 176 B0 | À 300 192 C0 | 320 208 D0 | à 340 224 E0 | 360 240 F0 | 0 0 0 0 | 0 |
| 1 | 201 129 81 | PU1 221 145 91 | ¡ 241 161 A1 | ± 261 177 B1 | Á 301 193 C1 | Ñ 321 209 D1 | á 341 225 E1 | ñ 361 241 F1 | 0 0 0 1 | 1 |
| 2 | 202 130 82 | PU2 222 146 92 | ¢ 242 162 A2 | 2 262 178 B2 | Â 302 194 C2 | Ò 322 210 D2 | â 342 226 E2 | ò 362 242 F2 | 0 0 1 0 | 2 |
| 3 | 203 131 83 | STS 223 147 93 | £ 243 163 A3 | 3 263 179 B3 | Ã 303 195 C3 | Ó 323 211 D3 | ã 343 227 E3 | ó 363 243 F4 | 0 0 1 1 | 3 |
| 4 | IND 204 132 84 | CCH 224 148 94 | 244 164 A4 | 284 180 B4 | Ä 304 196 C4 | Ô 324 212 D4 | ä 344 228 E4 | ô 364 244 F4 | 0 1 0 0 | 4 |
| 5 | NEL 205 133 85 | MW 225 149 95 | + 245 164 A5 | µ 285 181 B5 | Å 305 197 C5 | Õ 325 213 D5 | å 345 229 E5 | õ 365 245 F5 | 0 1 0 1 | 5 |
| 6 | SSA 206 134 86 | SPA 226 150 96 | 246 166 A6 | ¶ 266 182 B6 | Æ 306 198 C6 | Ö 326 214 D6 | œ 346 230 E6 | ö 366 246 F6 | 0 1 1 0 | 6 |

## FIG. 4B contd.

| Col 8 | Col 9 | Col A | Col B | Col C | Col D | Col E | Col F | b3 | b2 | b1 | b0 | Row |
|---|---|---|---|---|---|---|---|---|---|---|---|---|
| ESA<br>207/135/87 | EPA<br>227/151/97 | §<br>247/167/A7 | °<br>267/183/B7 | Ç<br>307/199/C7 | Œ<br>327/215/D7 | ç<br>347/231/E7 | œ<br>367/247/F7 | 0 | 1 | 1 | 1 | 7 |
| HTS<br>210/136/88 | <br>230/152/98 | ¤<br>250/168/A8 | <br>270/184/B8 | È<br>310/200/C8 | Ø<br>330/216/D8 | è<br>350/232/E8 | ø<br>370/248/F8 | 1 | 0 | 0 | 0 | 8 |
| HTJ<br>211/137/89 | <br>231/153/99 | ©<br>251/169/A9 | ¹<br>271/185/B9 | É<br>311/201/C9 | Ù<br>331/217/D9 | é<br>351/233/E9 | ù<br>371/249/F9 | 1 | 0 | 0 | 1 | 9 |
| VTS<br>212/138/8A | <br>232/154/9A | ª<br>252/170/AA | º<br>272/186/BA | Ê<br>312/202/CA | Ú<br>332/218/DA | ê<br>352/234/EA | ú<br>372/250/FA | 1 | 0 | 1 | 0 | 10 |
| PLD<br>213/139/8B | CSI<br>233/155/9B | «<br>253/171/AB | »<br>273/187/BB | Ë<br>313/203/CB | Û<br>333/219/DB | ë<br>353/235/EB | û<br>373/251/FB | 1 | 0 | 1 | 1 | 11 |
| PLU<br>214/140/8C | ST<br>234/156/9C | <br>254/172/AC | ¼<br>274/188/BC | Ì<br>314/204/CC | Ü<br>334/220/DC | ì<br>354/236/EC | ü<br>374/252/FC | 1 | 1 | 0 | 0 | 12 |
| R1<br>215/141/8D | OSC<br>235/157/9D | <br>255/173/AD | ½<br>275/189/BD | Í<br>315/205/CD | Ý<br>335/221/DD | í<br>355/237/ED | ÿ<br>375/253/FD | 1 | 1 | 0 | 1 | 13 |
| SS2<br>216/142/8E | PM<br>236/158/9E | <br>256/174/AE | <br>276/190/BE | Î<br>316/206/CE | <br>336/222/DE | î<br>356/238/EE | <br>376/254/FE | 1 | 1 | 1 | 0 | 14 |
| SS3<br>217/143/8F | APC<br>237/159/9F | <br>257/175/AF | ¿<br>277/191/BF | Ï<br>317/207/CF | ß<br>337/223/DF | ï<br>357/239/EF | ▨<br>377/255/FF | 1 | 1 | 1 | 1 | 15 |

EP 0 436 365 B1